Europäisches Patentamt

European Patent Office

Office européen des brevets

(11) Veröffentlichungsnummer: **0 310 592 B1**

(12) **EUROPÄISCHE PATENTSCHRIFT**

(45) Veröffentlichungstag der Patentschrift: **02.12.92**

(51) Int. Cl.⁵: **B65G 65/20**, E02F 5/08

(21) Anmeldenummer: **88890233.5**

(22) Anmeldetag: **06.09.88**

(54) **Ladeeinrichtung.**

(30) Priorität: **07.09.87 AT 2259/87**

(43) Veröffentlichungstag der Anmeldung:
**05.04.89 Patentblatt 89/14**

(45) Bekanntmachung des Hinweises auf die
Patenterteilung:
**02.12.92 Patentblatt 92/49**

(84) Benannte Vertragsstaaten:
**DE FR GB IT**

(56) Entgegenhaltungen:
**DE-B- 1 634 262**
**GB-A- 2 028 751**

(73) Patentinhaber: **Wippig, Werner, Dipl.-Ing.**
**Cranachweg 10**
**W-3160 Lehrte(DE)**

(72) Erfinder: **Wippig, Werner, Dipl.-Ing.**
**Cranachweg 10**
**W-3160 Lehrte(DE)**

EP 0 310 592 B1

## Beschreibung

Die Erfindung bezieht sich auf eine Ladeeinrichtung zum Erfassen und Weiterfördern von Schüttgut, Haufwerk oder Bohrgut mit einem Drehteller, an welchem exzentrisch zur Drehachse des Drehtellers ein Ladearm gelagert ist (Siehe z.B. GB-A-2.028.751).

Ladeeinrichtungen der eingangs genannten Art können auf speziellen Ladegeräten angeordnet sein, oder beispielsweise an der Oberfläche einer mit einer Streckenvortriebsmaschine verbundenen Laderampe angeordnet sein. Das geschrämte bzw. gewonnene Material kann auf derartigen Laderampen bei bekannten Einrichtungen mit hummerscherenartig ausgebildeten Ladearmen zu einem zentralen Abfördermittel transportiert werden. Ähnliche Konstruktionen sind auch im Schildausbau bekannt und es ist bekannt, am Schildvorderteil Hummerscherenlader, Sternförderer, Kratzkettenförderer oder analoge Ausbildungen für das Aufnehmen und Weiterleiten des Haufwerkes einzusetzen. Alle bekannten Konstruktionen sind auf Grund ihrer geometrischen und kinematischen Auslegung immer an eine bestimmte Aufnahmebreite gebunden. Mit den bekannten Einrichtungen ist es nur sehr schwer möglich Haufwerk über eine große Tiefe in Streckenlängsrichtung zu erfassen und sicher abzufördern.

Eine vorbekannte Konstruktion einer Ladeeinrichtung mit sogenannten Hummerscherenarmen weist einen in der Ebene der Laderampe bzw. Ladeplattform versenkten Drehteller auf, an welchem exzentrisch ein Ladearm angelenkt ist. Der Ladearm selbst ist über Winkelhebel oder Gleitführungen noch außerhalb des Drehkreises des Drehtellers abgestützt, so daß sich bei einem Verdrehen des Drehtellers eine hin- und hergehende Bewegung des Hummerscherenladearmes ergibt. Die Spitzen derartiger Hummerscherenladearme beschreiben je nach gewählter Anlenkkinematik mehr oder minder flache, gewölbte, elliptische Bahnen und der wirksame Hub in Streckenlängsrichtung, d.h. die kleine Halbachse der Ellipse ist bei derartigen Ausbildungen relativ kurz. Das aufzunehmende Material kann daher nur über eine geringe Tiefe in Streckenlängsrichtung gesehen, erfaßt werden.

Bei den bekannten Einrichtungen schließt sich jeweils an einen Ladehub, über welchen Material zum Abfördermittel gefördert wird,ein rücklaufender Leerhub an,um in der Folge Fördermaterial neu für den nächsten Ladehub erfassen zu können. Dadurch ist die maximale Förderkapazität der Ladeeinrichtung begrenzt.

Die Erfindung zielt nun darauf ab, eine Ladeeinrichtung der eingangs genannten Art zu schaffen, welche es ermöglicht, Material ohne einen Leerhub zu erfassen und gleichzeitig die Möglichkeit bietet, das Material auch über eine große Tiefe in Streckenlängsrichtung sicher und mit hoher Förderkapazität abzufördern. Zur Lösung dieser Aufgabe besteht die erfindungsgemäße Ladeeinrichtung im wesentlichen darin, daß der Ladearm, der in vorbekannter weise drehfest mit der exzentrisch zur Drehachse des Drehtellers angeordneten Achse verbunden und rotierbar am Drehteller gelagert ist, zu kontinuierlich kreisender Bewegung um die Drehachse des Drehtellers angetrieben ist. Dadurch, daß der Ladearm nicht mehr passiv durch die Rotation des Drehtellers zu einer Schwenkbewegung angetrieben wird, welcher der Exzentrizität des Lagerpunktes des Ladearmes am Drehteller entspricht, sondern unmittelbar zu rotierender Bewegung angetrieben wird, läßt sich die Bewegung des Ladearmes in einer Weise durchführen, daß der Ladearm während der gesamten Kreisbewegung seiner Rotationsachse um die Drehachse des Drehtellers immer mit zu förderndem bzw. abzuförderndem Material in Eingriff gelangt und dieses zu einem Abfördermittel verschiebt. Der Ladearm kann mit Vorteil zweiarmig ausgebildet sein, so daß zu dem Zeitpunkt, zu welchem einer der beiden Arme des Ladearmes gerade Material an das Fördermittel übergibt der jeweils zweite Ladearm bereits neuerlich Material aufnimmt, wodurch sich die Förderkapazität wesentlich erhöhen läßt.

Die Antriebe für die Rotation des Ladearmes und die Rotation des Drehtellers können prinzipiell voneinander getrennt ausgebildet werden, so daß beliebige Geschwindigkeiten für die jeweilige Drehbewegung von Drehteller und Ladearm gewählt werden können.Mit Vorteil aber und insbesondere im Hinblick auf eine zweiarmige Ausbildung des Ladearmes, ist die Ausbildung so getroffen, daß die Drehachse des Ladearmes mit der Achse des Drehtellers in Antriebsverbindung steht, wodurch sich eine besonders einfache Konstruktion ergibt. Bei einem mehrarmigen Ladearm kann hiebei das Übersetzungsverhältnis in der Antriebsverbindung mit Vorteil so eingestellt sein, daß die Antriebswelle des Ladearmes bei jeder Umkreisung der Achse des Drehtellers zu einer Rotation um einen Winkel von 360° geteilt durch die Anzahl der Arme angetrieben ist, wodurch der Vorteil erreicht wird, daß jeweils gleichzeitig mit der Übergabe des abzufördernden Materials an das Abfördermittel jeweils wenigstens ein anderer Arm des Ladearmes neuerlich Material aufnimmt und während seiner Rotation und seiner kreisenden Bewegung um die Achse des Drehtellers neues Material zum Abfördermittel zufördert.

Eine besonders einfache konstruktive Ausgestaltung ergibt sich dadurch, daß die Drehachse für den Ladearm als an einem drehfest mit dem Drehteller verbundenen Zapfen gelagerte hohle Antriebswelle ausgebildet ist. Auf diese Weise wird eine sichere Lagerung der Ladearme erzielt und gleichzeitig die Möglichkeit geschaffen den Antrieb für die Rotation des Ladearmes unmittelbar vom Drehantrieb des Drehtellers abzuleiten. Bei einer derartigen Ausbildung genügt es somit lediglich einen Antrieb für den Drehteller vorzusehen, wobei mit Vorteil die Ausbildung so getroffen sein kann, daß die Antriebswelle des Ladearmes über einen Umhüllungstrieb oder Zahneingriff mit der ortsfesten Drehachse des Drehtellers verbunden ist, wodurch sich eine besonders einfache und stabile Konstruktion ergibt.

Wie bereits erwähnt, ist mit Vorteil die Ausbildung so getroffen, daß der Ladearm zweiarmig ausgebildet ist und in seiner Längsmitte mit der Antriebswelle verbunden ist, wobei vorzugsweise der Ladearm über eine Steckverbindung mit der Antriebswelle verbunden ist. Eine derartige steckbare Verbindung des Ladearmes mit der Antriebswelle ermöglicht den raschen Austausch des hohem Verschleiß unterworfenen Ladearmes im Falle eines Bruches oder einer Beschädigung des Ladearmes.

Der Antrieb des Drehtellers kann in besonders einfacher Weise so ausgebildet sein, daß er gleichzeitig eine besonders stabile Lagerung des Drehtellers ermöglicht. Bevorzugt ist die Ausbildung hiezu so getroffen, daß der Drehteller über einen gleichachsigen Zahnkranz mit einem Motorritzel kämmt und im Bereich seines Zahnkranzes, insbesondere über ein Großdrehlager, gelagert ist.

Um nun den Antrieb für die Rotation des Ladearmes geschützt unterbringen zu können und die Möglichkeit zu bieten, daß die Antriebselemente dieses Antriebes für die Ladearme geschmiert werden können, ist mit Vorteil die Ausbildung so getroffen, daß der Drehteller mit einem topfförmigen Gehäuse verbunden ist, in welchem der Antrieb für die Antriebswelle des Ladearmes angeordnet ist. Innerhalb des topfförmigen Gehäuses kann hiebei ein Getriebeöl enthalten sein, welches für die ordnungsgemäße Schmierung des von einem Zahnradantrieb oder einem Umhüllungstrieb gebildeten Rotationsantriebes für die Ladearme dient.

Eine besonders stabile und störungsunanfällige Konstruktion läßt sich dadurch verwirklichen, daß das Gehäuse des Drehtellers an der ortsfesten Drehachse des Drehtellers rotierbar gelagert ist und dichtend an die Ladeplattform angeschlossen ist, wobei eine wirkungsvolle Abdichtung gegen Staub und feinkörniges Gestein dadurch erreicht werden kann, daß die Dichtung des Gehäuses gegenüber der Ladeplattform wenigstens zwei in radialer Richtung aufeinanderfolgende Dichtungseinrichtungen, insbesondere eine Labyrinthdichtung und eine Lippendichtung, umfaßt.

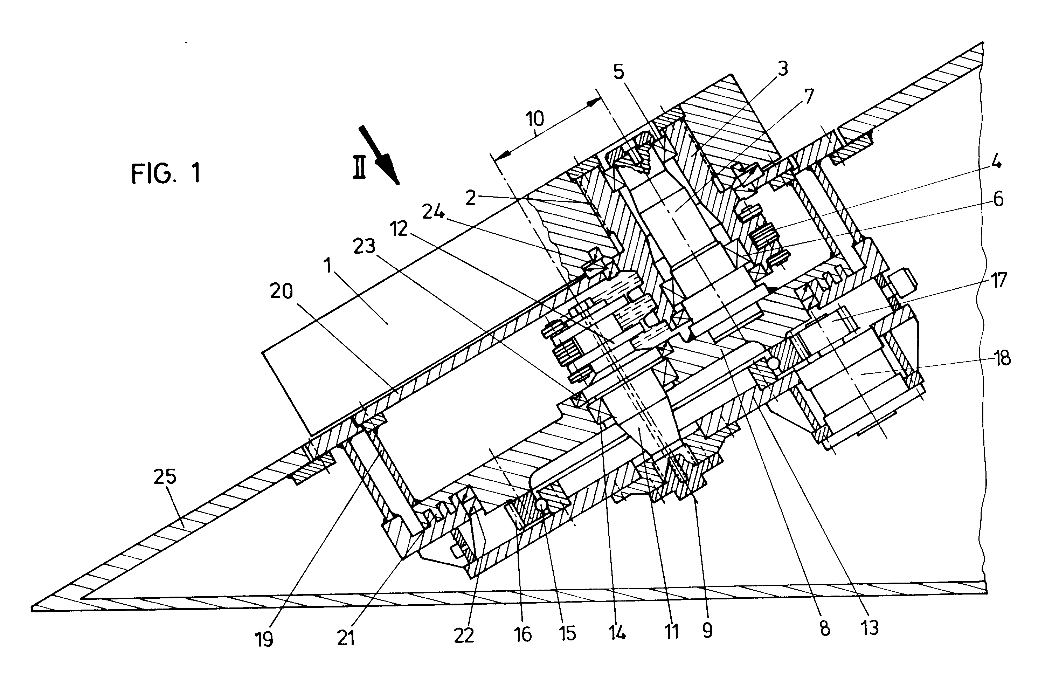

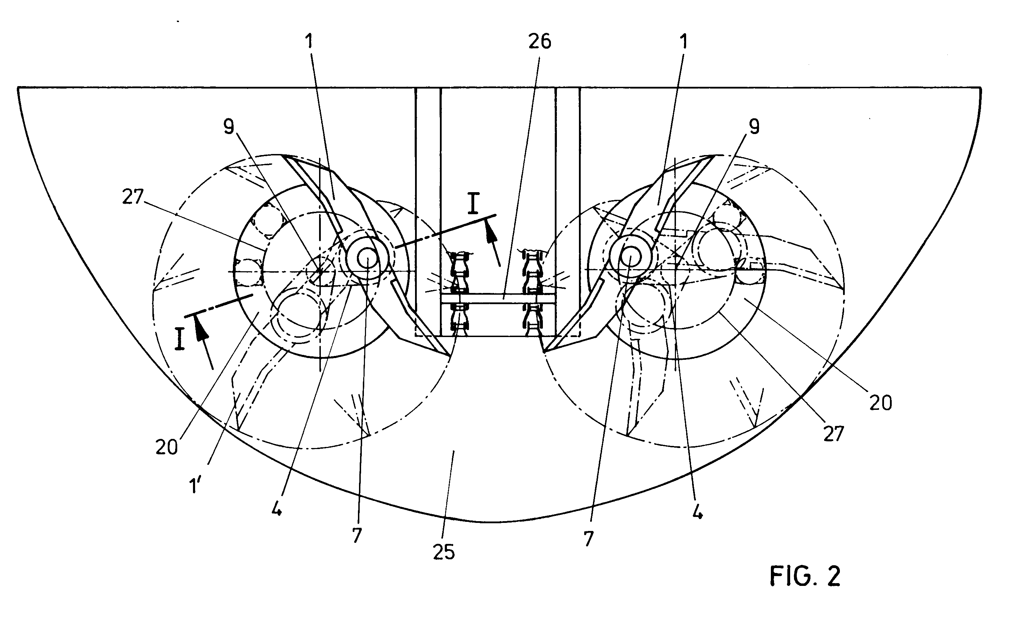

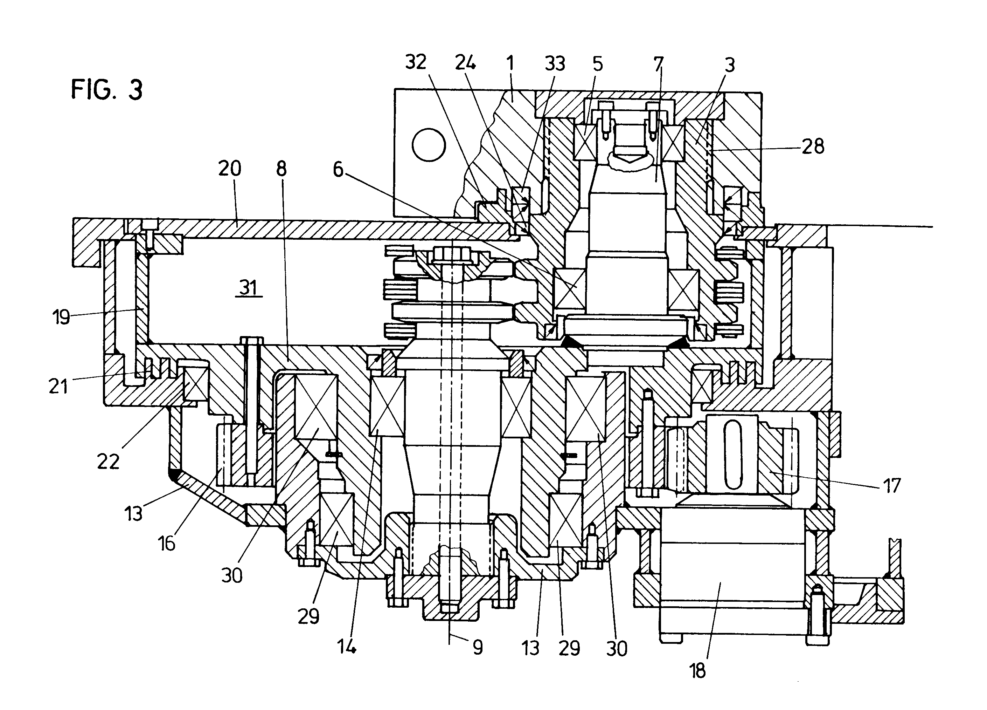

Die erfindungsgemäße Ausbildung wird nachfolgend an Hand von in der Zeichnung schematisch dargestellten Ausführungsbeispielen näher erläutert. In dieser zeigen: Fig. 1 einen Schnitt durch eine Ladeplattform mit in der Ladeplattform versenkt angeordneter Ladeeinrichtung; Fig. 2 eine Draufsicht in Richtung des Pfeiles II der Fig. 1 auf die Vorderkante einer Laderampe, wie sie beispielsweise mit einem Schildausbau verbunden sein kann, wobei zwei Ladeeinrichtungen an der Oberfläche der Laderampe dargestellt sind und die Fig. 1 einen Schnitt nach der Linie I-I der Fig. 2 darstellt und Fig. 3 eine abgewandelte Ausbildung der Lagerung der Ladeeinrichtung in einem Schnitt analog der Fig. 1.

In Fig. 1 ist ein doppelflügeliger Ladearm 1 mittels einer Steckverbindung 2 auf einen Drehkörper bzw. eine Hohlwelle 3 aufgesetzt. Diese Hohlwelle 3 wird mittels eines Kettentriebes 4 in jeweils vorbestimmter Lage während der Rotationsbewegung gehalten. Der Drehkörper bzw. die Hohlwelle 3 ist mittels der Wälzlager 5 bzw. 6 auf einem Drehzapfen 7 gelagert.

Der Drehzapfen 7 ist mit einem Drehteller 8 fest verbunden und kreist bei der Drehbewegung des Drehtellers 8 um die Drehachse 9 mit der konstruktiv vorgegebenen Exzentrizität 10.

Die Drehachse 9 wird körperlich gebildet durch einen feststehenden Zapfen 11 mit einer Verzahnung 12 für den Ketten-bzw. Zahntrieb zum Antrieb des Drehkörpers bzw. der Hohlwelle 3.

Der feststehende Zapfen 11 ist mit einem Lagergehäuse 13 drehfest verbunden und findet eine zusätzliche Abstützung mit Hilfe eines Wälzlagers 14 im Drehteller 8.

Die Lagerung des Drehtellers 8 im Lagergehäuse 13 erfolgt mittels eines Großdrehlagers 15 mit einer Verzahnung 16. In die Verzahnung 16 greift ein Ritzel 17 ein, das von einem Antriebsmotor 18 angetrieben wird. Dieser Motor 18 kann vorzugsweise ein Hydraulikmotor sein, wodurch sich eine einfache Regelbarkeit ergibt. Bei höheren erforderlichen Kräften können auch mehrere dieser Antriebsmotoren angeordnet sein. Desgleichen ist über einen entsprechenden Zahntrieb auch der Synchronantrieb für das paarweise Antreiben von Ladeeinrichtungen möglich.

Der Drehteller 8 ist mit einem Getriebegehäuse 19 und einem Gehäusedeckel 20 verbunden.

Zur Abdichtung zwischen dem sich drehenden Drehteller 8 mit seinem Getriebegehäuse 19 und seinem Deckel 20 können entsprechende Dichtungseinheiten 21 und 22 angeordnet sein.

In Fig. 1 ist die Dichtung 21 als Labyrinth dargestellt und die Dichtungseinheit 22 kann von bekannten Gleitring- oder Lippendichtungen gebildet sein.

In ähnlicher Weise sind Dichtungen 23 und 24 an den anderen Übergangsstellen zwischen drehenden und feststehenden Teilen angeordnet, wobei die Bodenplatte bzw. die Oberfläche der Laderampe mit 25 bezeichnet ist.

In Fig. 2 sind die gleichen Bezugszeichen eingetragen, wobei die Ladearme mit 1, die Drehzapfen der Ladearme mit 7, die Deckel der Drehtellergehäuse mit 20 und die Umschlingstriebe mit 4 bezeichnet sind.

Die Bodenplatte, in der die Ladeeinrichtung vertieft eingelassen ist, ist wieder mit 25 und das mittig angeordnete, weiterfördernde Kratzband mit 26 bezeichnet. Die Deckel 20 der Drehtellergehäuse liegen flächenbündig in der Bodenplatte 25 der Laderampe.

In der Draufsicht nach Fig. 2 ist nun die Funktion der Ladeeinrichtung näher verdeutlicht. Es sind jeweils zwei Ladeeinrichtungen neben dem mittig angeordneten weiterfördernden Kratzband 26 vorgesehen. Die Ladearme 1 sind als doppelflügelige Ladearme ausgebildet und durch den Umhüllungstrieb 4 zur Rotation um die Achse des Drehzapfens 7 angetrieben. Die Drehzapfen 7 bewegen sich im Kreis um die Rotationsachse 9 des Drehtellers und die Hüllkurve, welche von den Drehzapfen beschrieben wird, ist in Fig. 2 mit 27 bezeichnet. Ausgehend aus der mit vollen Strichen angedeuteten Stellung der Ladearme 1, bei welchen jeweils ein Arm das geförderte Material auf das weiterfördernde Kratzförderband 26 abwirft, wird nun bei einer derartigen Bewegung des Drehzapfens 7 in Richtung des Umfanges des Hüllkreises 27 der Ladearm 1 jeweils verschwenkt, wobei das dem jeweiligen Flügel des Ladearmes 1, welcher gerade das Material auf das weiterfördernde Kratzband 26 abwirft, gegenüberliegende Ende des Armes, d.h. der zweite Flügel, bereits mit einem Ladehub beginnt. Dieser zweite Flügel wird nun bei seiner Bewegung um die Achse des Drehzapfens 7 und um die Drehachse 9 des Drehtellers verschwenkt und gelangt beispielsweise in die strichliert angedeutete Position 1′ um nach vollständigem Umlauf des Drehzapfens 7 um die Achse 9 wiederum in eine identische Lage zu gelangen wie die durchgezeichnete Position des zweiflügeligen Ladearmes 1. Bei diesem vollständigen Umlauf um die Achse 9 um 360° wird somit der zweiflügelige bzw. doppelflügelige Ladearm 1 um 180° verschwenkt und gelangt in eine identische Ausgangslage. Zwischen den beiden skizzierten Positionen 1 und 1′ der Ladearme sind naturgemäß eine Reihe von Zwischenstellungen vorhanden, bei welchen die Winkelstellung jeweils unterschiedlich ist. Die Drehachse der Ladearme bewegt sich somit bei der Rotation des Drehtellers exzentrisch um dessen Drehachse, wodurch die Lage und Richtung des doppelflügeligen Ladearmes 1 jeweils in die korrekte Position gebracht wird. Die Koppelung der beiden Bewegungen erfolgt über den Umhüllungstrieb bzw. Zahnradtrieb unmittelbar, wobei durch Wahl des Untersetzungsverhältnisses im Umhüllungs- bzw. Zahntrieb erzielt werden kann, daß der doppelflügelige Ladearm während einer Rotationsbewegung immer wieder in die gleiche Ausgangsposition zurückkehrt.

Durch Umstecken des Ladearmes auf seiner Drehachse bzw. auf dem Drehzapfen 7, kann Lage und Richtung der Ladearme variiert werden, so daß der jeweils für den Ladevorgang optimale Effekt erzielt werden kann. Die Steckverbindung kann hiebei mit Vorteil so ausgebildet werden, daß sie unterschiedliche Drehlagen ermöglicht und eine derartige Steckverbindung ist beispielsweise in Fig. 3 deutlicher ausgeführt.

In Fig. 3 weist die Hohlwelle 3 eine Außenverzahnung 28 auf, welche die Festlegung der Ladearme 1 in unterschiedlichen Drehstellungen relativ zur Hohlwelle 3 ermöglicht. Abweichend von der Ausbildung nach Fig. 1 ist hier die Lagerung des Drehtellers nicht durch das Lager 15 auf großem Durchmesser, sondern durch innenliegende und in axialem Abstand übereinander angeordnete Lager 29 und 30 verwirklicht, so daß sich auch hier eine besonders stabile Lagerung ergibt. Im Inneren des vom Deckel 20 des Drehtellers 8 abgeschlossenem Gehäuses ist ein Hohlraum 31 für die Unterbringung des Zahntriebes bzw. Umhüllungstriebes vorgesehen, wobei dieser Hohlraum 31 mit Schmieröl für den Antrieb 4 gefüllt sein kann.

Im übrigen sind in Fig. 3 die Bezugszeichen der Fig. 1 unverändert beibehalten, wobei zusätzlich in Fig. 3 neben der Abdichtung 24 der Hohlwelle 3 gegenüber dem Deckel 20 des Drehtellers 8 noch eine Labyrinthdichtung vorgesehen ist, welche einen mit dem Gehäusedeckel 20 verbundenen Bauteil 32 beinhaltet. Zusätzlich ist ein weiteres Dichtungselement 33 vorgesehen um zu verhindern, daß auf der Oberfläche der Laderampe abgelagertes feinkörniges Material in das Getriebe gelangen kann.

**Patentansprüche**

1. Ladeeinrichtung zum Erfassen und Weiterfördern von Schüttgut, Haufwerk oder Bohrgut mit einem sich kontinuierlich drehenden Drehteller (8), an welchem exzentrisch zur Drehachse (9) des Drehtellers (8) ein Ladearm (1) gelagert ist, wobei dieser drehfest mit einer exzentrisch zur Drehachse (9) des Drehtellers (8) angeordneten Drehachse (7) verbunden ist und diese Drehachse (7) des Ladearmes (1) rotierbar am Drehteller (8) gelagert ist, dadurch gekennzeichnet, daß der Ladearm (1) zu kontinuierlich kreisender Bewegung um die Drehachse (9) des Drehtellers (8) angetrieben ist.

2. Ladeeinrichtung nach Anspruch 1, dadurch gekennzeichnet, daß die Drehachse des Ladearmes (1) mit der Achse (9) des Drehtellers (8)
in Antriebsverbindung steht.

3.  Ladeeinrichtung nach Anspruch 1 oder 2, dadurch gekennzeichnet, daß die Drehachse für
den Ladearm (1) als an einem drehfest mit
dem Drehteller (8) verbundenen Zapfen (7) gelagerte hohle Antriebswelle (3) ausgebildet ist.

4.  Ladeeinrichtung nach Anspruch 1, 2 oder 3,
dadurch gekennzeichnet, daß der Ladearm (1)
zweiarmig ausgebildet ist und in seiner Längsmitte mit der Antriebswelle (3) verbunden ist.

5.  Ladeeinrichtung nach einem der Ansprüche 1
bis 4, dadurch gekennzeichnet, daß die Antriebswelle (3) des Ladearmes (1) über einen
Umhüllungstrieb (4) oder Zahneingriff mit der
ortsfesten Drehachse (9) des Drehtellers (8)
verbunden ist.

6.  Ladeeinrichtung nach einem der Ansprüche 1
bis 5, dadurch gekennzeichnet, daß der Ladearm (1) über eine Steckverbindung mit der
Antriebswelle (3) verbunden ist.

7.  Ladeeinrichtung nach einem der Ansprüche 1
bis 6, dadurch gekennzeichnet, daß die Antriebswelle (3) eines mehrarmigen Ladearmes
(1) bei jeder Umkreisung der Achse (9) des
Drehtellers (8) zu einer Rotation um einen Winkel von 360° geteilt durch die Anzahl der
Arme angetrieben ist.

8.  Ladeeinrichtung nach einem der Ansprüche 1
bis 7, dadurch gekennzeichnet, daß der Drehteller (8) über einen gleichachsigen Zahnkranz
(16) mit einem Motorritzel (17) kämmt und im
Bereich seines Zahnkranzes, insbesondere
über ein Großdrehlager (15), gelagert ist.

9.  Ladeeinrichtung nach einem der Ansprüche 1
bis 8, dadurch gekennzeichnet, daß der Drehteller (8) mit einem topfförmigen Gehäuse (19)
verbunden ist, in welchem der Antrieb (4) für
die Antriebswelle (3) des Ladearmes (1) angeordnet ist.

10. Ladeeinrichtung nach Anspruch 9, dadurch gekennzeichnet, daß das Gehäuse (19) des Drehtellers (8) an der ortsfesten Drehachse (9) des
Drehtellers (8) rotierbar gelagert ist und dichtend an die Ladeplattform (25) angeschlossen
ist.

11. Ladeeinrichtung nach Anspruch 10, dadurch
gekennzeichnet, daß die Dichtung des Gehäuses (19) gegenüber der Ladeplattform wenigstens zwei in radialer Richtung aufeinanderfolgende Dichtungseinrichtungen, insbesondere
eine Labyrinthdichtung (21) und eine Lippendichtung (22), umfaßt.

**Claims**

1.  Loading device to grasp and to transport loose
soil material, bulk material or bored material by
means of a continually rotating disc(8), on
which a loading arm(1) is supported excentrically to the axis(9) of the disc(8), wherein this
said loading arm(1) is fixed to a shaft(7) situated in a excentric position to the axis(9) of the
disc(8) and the shaft(7) is rotatably situated
within the disc(8),
characterized in that the loading arm(1) is
driven to a continual revolving rotation around
the axis(9) of the disc(8).

2.  Loading device as claimed in claim 1, characterized in that the turning shaft of the loading
arm(1) is connected to the shaft of the disc(8)
by means of a driving device.

3.  Loading device as claimed in claim 1 or 2,
characterized in that the axle of the loading
arm(1) is formed as a hollow shaft(3) mounted
to a pivot(7) which is solid connected to the
disc(8).

4.  Loading device as claimed in claim 1,2 or 3,
characterized in that the loading arm(1) is developped double-armed and that it is connected in its middle to the shaft(3).

5.  Loading device as claimed in the claims 1 to 4,
characterized in that the hollow shaft(3) of the
loading arm(1) is mounted to the non rotating
axle(9) of the disc(8) by means of a chain
drive(4) or a gear transmission.

6.  Loading device as claimed in the claims 1 to 5,
characterized in that the loading arm(1) is connected to the driving shaft(3) by means of a
socket coupling like spline shaft.

7.  Loading device as claimed in the claims 1 to 6,
characterized in that at each rotation around
the axle(9) of the disc(8) the driving shaft(3) of
a more-armed loading arm(1) is driven at an
angle of 360° divided by the number of arms.

8.  Loading device as claimed in the claims 1 to 7,
characterized in that the disc(8) is fitted with a
ring gear(16), situated in the same axis, which
is driven by a gear(17) mounted on the shaft of the driving motor and that said ring gear is mounted to a large slewing bearing(15).

9. Loading device as claimed in the claims 1 to 8, characterised in that the disc (8) is connected to circular housing(19), in which the drive(4) for the driving shaft(3) of the loading arm(1) is located.

10. Loading device as claimed in the claims 1 to 9, characterized in that the housing(19) of the disc(8) has its rotary bearing at the fixed axis-(9) of the disc(8) and that sealings are situated between the housing(19) and the loading platform(25).

11. Loading device as claimed in the claims 1 to 10,characterized in that the sealings between the housing(19) and the loading platform(25) exist at least of two sealing systems, in radial direction following eachother, especially consisting of one labyrinth sealing(21) and one lip packing(22).

**Revendications**

1. Dispositif de chargement pour relever, charger et transporter de deblais, constitué par un disque(8) tournant continu, outillé avec un bras de chargement(1) dans une position excentrique à axe rotation(9) du disque(8) et ce bras de chargement(1) est monté solide sur un arbre de rotation(7) quel est déposé excentrique à axe de rotation(9) du disque(8), caractérisé en ce que le bras de chargement(1) est entrainé continu à déplacement circulair autour du pivot(9) du disque(8).

2. Dispositif de chargement selon la revendication 1, caractérisé en ce que larbre du bras de chargement(1) présente un assemblage d'entrainementavec l'arbre du disque(8).

3. Dispositif de chargement selon les revendications 1 et 2, caractérisé en ce que l'axe de rotation pour le bras de chargement(1) est développé comme un arbre évidé, monté sur le pivot(7) qui est assemblé au disque(8).

4. Dispositif de chargement selon les revendications 1 à 3, caractérisé en ce que le bras de chargement(1) présente deux bras, monté au centre de symétrie sur l'arbre d'entrainement(3).

5. Dispositif de chargement selon les revendications 1 à 4, caractérisé en ce que l'arbre d'entrainement(3) du bras de chargement(1) est raccordé à l'axe stationnaire(9) du bras de chargement(1)par chaîne ou engrenage.

6. Dispositif de chargement selon les revendications 1 à 5, i. caractérisé en ce que le bras de chargement(1) est raccordé à l'arbre d'entrainement(3) par un accouplement démontable.

7. Dispositif de chargement selon les revendications 1 à 6, caractérisé en ce que l'arbre d'entrainement(3) d'un bras de chargement avec plus de deux bras est entrainé à chaque rotation de l'axe(9) du disque(8) à un angle de rotation de 360° divisé par le nombre des bras.

8. Dispositif de chargement selon les revendications 1 à 7, caractérisé en ce que le disque(8) est munit avec une roue dentée(16) quelle est supportée par un roulement à rouleaux et quelle est entrainée par un pignon monté au moteur.

9. Dispositif de chargement selon les revendications 1 à 8, caractérisé en ce que le disque(8) est raccordé à une boîte ronde(19), dans quelle l'entrainement(4) pour l'arbre d'entrainement(3) du bras de chargement(1) est établit.

10. Dispositif de chargement selon les revendications 1 à 9, caractérisé en ce que la boîte(19) du disque(8) est supportée rotatif sur l'axe stationnaire(9) du disque(8) et que entre la boîte(19) et la plate-forme de chargement(25) un joint d'étanchéité est installé.

11. Dispositif de chargement selon les revendications 1 à 10, caractérisé en ce que le joint d'étanchéité entre la boîte(19) et la plate-forme(25) se compose au moins de deux joints d'étanchéité, quels sont situés côte à côte en direction radial et quels consistent en un joint de labyrinthe(21) et un joint en caoutchouc-(22).

FIG. 1

EP 0 310 592 B1

FIG. 2

FIG. 3

EP 0 310 592 B1